# EUROPÄISCHE PATENTSCHRIFT

(11) **EP 0 628 597 B1**
(45) Veröffentlichungstag und Bekanntmachung des Hinweises auf die Patenterteilung: **19.11.1997**
(21) Anmeldenummer: 94107558.2
(22) Anmeldetag: 16.05.1994
(51) Int. Cl.: C08L 9/00, B60C 1/00

(54) **Kautschukmischung, daraus hergestellte Reifenlauffläche und Reifen mit dieser Reifenlauffläche**
Rubber composition, tread made therefrom and tyres containing these treads
Composition de caoutchouc, bande de roulement fabriquée à partir de celle-ci et pneumatiques avec ces bandes de roulement

(30) Priorität: 09.06.1993 DE 4319240
(43) Veröffentlichungstag der Anmeldung: 14.12.1994
(73) Patentinhaber: SP REIFENWERKE GMBH, 63450 Hanau (DE)
(72) Erfinder: Fuchs, Hans-Bernd, Dr. Dipl.-Chem., D-63755 Alzenau-Hörstein (DE); Steinbrecht, Ulrich, Dr. Dipl.-Chem., D-64372 Ober-Ramstadt (DE)
(74) Vertreter: Dipl.-Phys.Dr. Manitz Dipl.-Ing. Finsterwald Dipl.-Ing. Grämkow Dipl.-Chem.Dr. Heyn Dipl.-Phys. Rotermund Morgan B.Sc.(Phys.)

(56) Entgegenhaltungen:
- EP-A- 0 477 682
- EP-A- 0 524 339
- CHEMICAL PATENTS INDEX, BASIC ABSTRACTS JOURNAL Week 8638, 12. November 1986 Derwent Publications Ltd., London, GB; AN 248787 & JP-A-61 176 643 (YOKOHOMA RUBBER KK) 8. August 1986

## Beschreibung

Die vorliegende Erfindung betrifft eine mit Schwefel vulkanisierbare Kautschukmischung, die ein Copolymer aus konjugiertem Dien und vinylaromatischer Verbindung, Kieselsäure als Füllstoff, üblicherweise verwendete Zusätze sowie ein Vulkanisationssystem enthält. Ferner betrifft die Erfindung Reifenlaufflächen, die diese Kautschukmischung enthalten, sowie Reifen mit einer Reifenlauffläche, die die vulkanisierte Kautschukmischung enthält.

Die bei Reifen gewünschten Eigenschaften sind nur schwer gleichzeitig zu erreichen, da sie teilweise einander widersprechen. So bewirken Maßnahmen, die zu einer Verringerung des Rollwiderstands führen, eine Abnahme der Abriebfestigkeit. Der teilweise oder völlige Ersatz von Ruß durch den Füllstoff Kieselsäure z.B. verringert zwar den Rollwiderstand des Reifens, verschlechtert aber dessen Abriebfestigkeit. In der EP 0 299 074 B1 wird zur Vermeidung dieser Verschlechterung vorgeschlagen, für Kautschukmischungen, die Kieselsäure als Füllstoff in großen Anteilen enthalten, Polymere zu verwenden, die mit einer speziellen Silanverbindung modifiziert sind. Diese Maßnahme ist wegen der Verwendung spezieller Silanverbindungen für eine industrielle Anwendung ungünstig.

Um diesen Nachteil zu vermeiden, wird in der EP 0 501 227 A1 eine Kautschukmischung vorgeschlagen, die ein durch Lösungspolymerisation in einem Kohlenwasserstofflösemittel hergestelltes Copolymer aus konjugiertem Dien und vinylaromatischer Verbindung, eine ganz spezielle Kieselsäure, die z.B. nach dem in der EP 0 157 703 B1 beschriebenen Verfahren hergestellt ist, üblicherweise verwendete Zusätze sowie ein Vulkanisationssystem enthält. Diese Kautschukmischung wird in bekannter Weise durch stufenweises Vermischen der Bestandteile hergestellt, wobei Temperaturen eingehalten werden, bei denen noch keine Vernetzung eintritt. Der Kautschukmischung kann als Verschnitt mindestens ein weiteres Dienelastomer zugesetzt werden, wie z.B. Polyisopren, Naturkautschuk oder Polybutadien.

In den Beispielen und Vergleichsbeispielen dieser Druckschrift werden Reifenlaufflächen miteinander verglichen, die aus Kautschukmischungen hergestellt wurden, die durch Emulsionspolymerisation herstelltes Styrol-Butadien-Copolymer (im folgenden Emulsions-SBR) und spezielle Kieselsäure oder klassische Kieselsäure oder Ruß als Füllstoff enthalten oder die durch Lösungspolymerisation hergestelltes Styrol-Butadien-Copolymer (im folgenden Lösungs-SBR) und spezielle Kieselsäure oder Ruß als Füllstoff enthalten. Aus den angegebenen Ergebnissen ist zu entnehmen, daß Laufflächen mit Emulsions-SBR und Ruß eine gute Lebensdauer unter Abrieb, aber einen schlechten Rollwiderstand haben, daß Laufflächen mit Emulsions-SBR und klassischer Kieselsäure schlechte Lebensdauer unter Abrieb, aber dafür einen guten Rollwiderstand haben und daß die in der EP 0 501 227 A1 beanspruchten Laufflächen, d.h. Laufflächen mit Lösungs-SBR und spezieller Kieselsäure sowohl beim Rollwiderstand als auch bei der Lebensdauer unter Abrieb gute Ergebnisse liefern.

Aufgabe der Erfindung ist die Bereitstellung von Kautschukmischungen, die in Reifenlaufflächen bei der Abriebfestigkeit und dem Rollwiderstand zu guten Ergebnissen führen, ohne daß spezielle Kieselsäuren verwendet werden müssen.

Ausgehend von der eingangs genannten mit Schwefel vulkanisierbaren Kautschukmischung wird diese Aufgabe dadurch gelöst, daß die Kautschukmischung 10 bis 85 Gewichtsteile durch Emulsionspolymerisation hergestelltes Copolymer aus konjugiertem Dien und vinylaromatischer Verbindung mit einer Glasübergangstemperatur (Tg) zwischen -20°C und -70°C, 5 bis 40 Gewichtsteile Polyisopren, mit überwiegendem 3,4-Anteil, 10 bis 50 Gewichtsteile Polybutadien sowie 50 bis 90 Gewichtsteile Kieselsäure enthält, wobei alle Gewichtsteile auf 100 Gewichtsteile Elastomere bezogen sind.

Überraschenderweise wurde gefunden, daß Kautschukmischungen mit dieser Zusammensetzung zu einer vergleichbaren Abriebfestigkeit wie die entsprechenden rußhaltigen Kautschukmischungen führen, aber einen deutlich niedrigeren tan δ (Verlustfaktor) aufweisen als die entsprechenden rußhaltigen Kautschukmischungen. Ein niedriger tan δ korreliert mit einem niedrigen Rollwiderstand. Wie den Versuchsergebnissen der EP 0 501 227 A1 zu entnehmen ist, wird der durch den Ersatz von Ruß durch klassische Kieselsäure erzielte verbesserte Rollwiderstand durch eine deutliche Verschlechterung der Abriebfestigkeit erkauft, sofern die Kautschukmischungen Emulsions-SBR als Elastomer enthalten. Erfindungsgemäß wird eine Verschlechterung der Abriebfestigkeit vermieden, ohne daß eine spezielle Kieselsäure in Kombination mit Lösungs-SBR verwendet werden muß.

Die erfindungsgemäße Kautschukmischung kann zur Herstellung von Reifenlaufflächen verwendet werden, die für Reifen von Personenkraftwagen, Motorrädern, 4 x 4 Geländefahrzeugen, Transportern und Leicht-Lastkraftwagen geeignet sind.

Wesentlich für die Erzielung der oben genannten guten Eigenschaften ist, daß die Kautschukmischung als Elastomere 10 bis 85 Gewichtsteile durch Emulsionspolymerisation hergestelltes Copolymer aus konjugiertem Dien und vinylaromatischer Verbindung, 5 bis 40 Gewichtsteile Polyisopren und 10 bis 50 Gewichtsteile Butadien enthält, wobei die Gewichtsteile jeweils auf 100 Gewichtsteile Elastomere bezogen sind. Besonders bevorzugt werden 20 bis 70 Gewichtsteile durch Emulsionspolymerisation hergestelltes Copolymer aus konjugiertem Dien und vinylaromatischer Verbindung, 10 bis 30 Gewichtsteile Polyisopren und 20 bis 50 Gewichtsteile Polybutadien verwendet.

Die Glasübergangstemperatur (Tg) des Copolymers aus konjugiertem Dien und vinylaromatischer Verbindung liegt im Bereich von -20°C bis -70°C. Bevorzugt werden Copolymere mit einer Glasübergangstemperatur im Bereich von -25°C bis -55°C eingesetzt. Die Werte beziehen sich auf nach der Torsionspendel-Methode bestimmte Glasübergangstemperaturen.

Das durch Emulsionspolymerisation hergestellte Copolymer aus konjugiertem Dien und vinylaromatischer Verbindung hat vorzugsweise einen Gehalt an vinylaromatischer Verbindung zwischen 10 und 50 Gew.-% und besonders bevorzugt zwischen 10 und 45 Gew.-%.

Als konjugiertes Dien des Copolymers sind 1,3 Butadien, Isopren und 2,3-Dimethyl-1,3-butadien geeignet. Als vinylaromatische Verbindung des Copolymers sind Styrol und o-, m- und p-Methylstyrol geeignet. Bevorzugt ist das Copolymer Styrol-Butadien-Copolymer.

Die Copolymere können in Form von ölverstreckten Copolymeren eingesetzt werden. In der Regel kann der Gesamtölgehalt der Kautschukmischung im Bereich von 25 bis 45 Gewichtsteilen je 100 Gewichtsteile Elastomere liegen.

Als Polyisopren wird in der erfindungsgemäßen Kautschukmischung Polyisopren mit überwiegendem 3,4-Anteil eingesetzt. Als Polybutadiene werden vorzugsweise Polybutadiene mit hohem 1,4-cis-Bindungsgehalt insbesondere über 90%, eingesetzt.

Als Füllstoff enthält die erfindungsgemäße Kautschukmischung klassische Kieselsäure in einer Menge von 50 bis 90 Gewichtsteilen je 100 Gewichtsteile Elastomere. Unter "klassischer" Kieselsäure ist Kieselsäure zu verstehen, wie sie üblicher Weise zur Reifenherstellung verwendet wird und als Handelsprodukte von verschiedenen Herstellern angeboten wird. Diese Kieselsäuren haben üblicherweise eine BET-Oberfläche zwischen 100 und 250 m²/g nach DIN 66 131, ISO 5794/1 Annex D, eine CTAB-Oberfläche zwischen 100 und 250 m²/g nach ISO 6810, ASTM D-3765 und eine mit DBP gemessene Ölaufnahme zwischen 150 und 250 ml/100g nach ISO S-4656, ASTM D-2414, DIN 53601. Vorzugsweise enthält die Kautschukmischung 70 bis 90 Gewichtsteile Kieselsäure je 100 Gewichtsteile Elastomere.

Als übliche Zusätze kann die erfindungsgemäße Kautschukmischung aromatische und/oder naphthenische Öle, Verstärkungsmittel, Alterungsschutzmittel, Tackifier, Aktivatoren und Verarbeitungshilfsmittel enthalten. Ferner enthält die erfindungsgemäße Kautschukmischung ein Vulkanisationssystem mit Schwefel und Vulkanisationsbeschleunigern.

Die Kautschukmischung kann nach folgendem mehrstufigem Verfahren herstellt werden. In einer ersten Stufe werden die Elastomere mit den üblichen Zusätzen und der Kieselsäure in einem Kneter gemischt. Die Temperatur soll dabei nicht auf Werte steigen, bei denen bereits eine Vernetzung einsetzt. Überlicherweise sollen Temperaturen von 160 bis 170°C nicht überschritten werden. Nach der Abkühlung der Mischung wird sie nochmals in einer zweiten Stufe geknetet, wobei wiederum die Temperatur nicht auf Werte steigen soll, bei denen eine Vernetzung stattfindet. In einer anschließenden dritten Stufe wird das Vulkanisationssystem auf einer Walze eingearbeitet, wobei auch hierbei Temperaturen unterhalb der Vernetzungstemperatur eingehalten werden. Die Zeiten für die Mischprozesse in den einzelnen Stufen sind jeweils so bemessen, daß eine gute Durchmischung der Bestandteile erreicht wird.

Die Erfindung wird an Hand der folgenden Beispiele näher erläutert.

Die Eigenschaften der erfindungsgemäßen Kautschukmischungen und der zu Vergleichszwecken hergestellten Kautschukmischungen wurden an aus den Mischungen jeweils hergestellten vulkanisierten Probekörpern bestimmt. Zur Bestimmung des Verlustfaktors (tan δ) wird auf DIN 53513 verwiesen. Der Abrieb wurde nach DIN 53516 bestimmt.

Es wurden sechs Kautschukmischungen mit den in der folgenden Tabelle angegebenen Zusammensetzungen hergestellt, wobei jeweils die Gewichtsteile der Komponenten in den Mischungen angegeben sind. Die Mischungen 1 bis 3 sind erfindungsgemäße Mischungen, die Mischungen 4 bis 6 sind Vergleichsmischungen.

**Tabelle**

| KAUTSCHUKMISCHUNG | 1 | 2 | 3 | 4 | 5 | 6 |
|---|---|---|---|---|---|---|
| BESTANDTEILE | | | | | | |
| Emulsions-SBR A | 68,75 | | | 68,75 | | |
| Emulsions-SBR B | | 55 | | | 55 | |
| Emulsions-SBR C | | | 55 | | | 55 |
| Polybutadien | 30 | 40 | 40 | 30 | 40 | 40 |
| Polyisopren | 20 | 20 | 20 | 20 | 20 | 20 |
| Ruß N 234 | | | | 80 | 80 | 80 |
| Kieselsäure VN 3 | 80 | 80 | 80 | | | |
| Verstärkungsmittel | 12,8 | 12,8 | 12,8 | | | |
| Zinkoxid | 2,5 | 2,5 | 2,5 | 2,5 | 2,5 | 2,5 |
| Stearinsäure | 1 | 1 | 1 | 1 | 1 | 1 |
| Aromatisches Öl | 13,13 | 13,13 | 13,13 | 13,13 | 13,13 | 13,13 |
| Alterungsschutzmittel | 2 | 2 | 2 | 2 | 2 | 2 |
| Tackifier | 1,5 | 1,5 | 1,5 | 1,5 | 1,5 | 1,5 |
| Vulkanisations-beschleuniger A | 1,7 | 1,7 | 1,7 | 1,3 | 1,3 | 1,3 |
| Vulkanisations-beschleuniger B | 1,5 | 1,5 | 1,5 | 0,3 | 0,3 | 0,3 |
| Schwefel | 1,4 | 1,4 | 1,4 | 1,7 | 1,7 | 1,7 |
| Lebensdauer unter Abrieb | 100 | 108 | 105 | 104 | 110 | 100 |
| Bezugswerte zum gemessenen tan δ bei 70°C | 141 | 144 | 145 | 108 | 106 | 100 |

Die in obiger Tabelle angegebenen Bestandteile werden im folgenden erläutert:

Emulsions-SBR A: Ölverstrecktes, durch Emulsionspolymerisation hergestelltes Styrol-Butadien-Copolymer mit 37,5 Gewichtsteilen hocharomatischem Öl je 100 Gewichtsteile Styrol-Butadien-Copolymer, mit 22,5 bis 24,5 Gewichtsteilen Styrol je 100 Gewichtsteile Styrol-Butadien-Copolymer, mit 8% 1,4-cis-Bindungen im Butadienanteil, 53 % 1,4-trans-Bindungen im Butadienanteil und 15 % 1,2-Vinylbindungen im Butodienanteil sowie mit einem Tg von -50°C.

Emulsions-SBR B: Ölverstrecktes, durch Emulsionspolymerisation hergestelltes Styrol-Butadien-Copolymer mit 37,5 Gewichtsteilen hocharomatischem Öl je 100 Gewichtsteile Styrol-Butadien-Copolymer, mit 31,5 Gewichtsteilen Styrol je 100 Gewichtsteile Styrol-Butadien-Copolymer, mit 7 % 1,4-cis-Bindungen im Butadienanteil, 47 % 1,4-trans-Bindungen im Butadienanteil und 13 % 1,2-Vinylbindungen im Butadienanteil sowie mit einem Tg von -40°C.

Emulsions-SBR C: Ölverstrecktes, durch Emulsionspolymerisation hergestelltes Styrol-Butadien-Copolymer mit 37,5 Gewichtsteilen hocharomatischem Öl je 100 Gewichtsteile Styrol-Butadien-Copolymer, mit 40 Gewichtsteilen Styrol je 100 Gewichtsteile Styrol-Butadien-Copolymer, mit 6 % 1,4-cis-Bindungen im Butadienanteil, 42 % 1,4-trans-Bindungen im Butadienanteil und 12 % 1,2-Vinylbindungen im Butadienanteil sowie mit einem Tg von -30°C.

Polybutadien: 97 % 1,4-cis-Bindungen, 2 % 1,4-trans-Bindungen, <1 % Vinylbindungen, Tg etwa -106°C.

Polyisopren: 60 % 3,4-Gehalt (NMR-Methode), Tg etwa -10°C.

Ruß N 234: BET-Oberfläche 125 m²/g, bestimmt nach ISO S-4652, ASTM D-3037, DIN 66132; CTAB-Oberfläche 120 m²/g, bestimmt nach ISO 6810, ASTM D-3765; DBP-Absorption 125 ml/100 g, bestimmt nach ISO S-4656, ASTM D-2414, DIN 53601.

Kieselsäure VN 3: BET-Oberfläche 170 m²/g, Handelsprodukt der Degussa Ultrasil^{R} VN3 Granulat.

Verstärkungsmittel: Mischung im Verhältnis 1:1 von Ruß N 330 und polysulfidischem Organosilan, Handelsprodukt der Degussa X 50-S.

Alterungsschutzmittel: Gemischte Di-aryl-p-phenylendiamine.

Tackifier: Kondensationsprodukte aus p-tert.-Octylphenol und Formaldehyd.

Vulkanisationsbeschleuniger A: CBS (N-Cyclohexyl-2-benzo-thiazolsulfenamid).

Vulkanisationsbeschleuniger B: DPG (N,N'-Diphenylguanidin).

Die Kautschukmischungen 1 bis 6 wurden jeweils folgendermaßen hergestellt. In einem Kneter mit einer Knetertemperierung von 50°C und einer Kneterdrehzahl von 50 pro min wurden in einer ersten Stufe die Elastomere gegeben und geknetet. Dann wurden Zinkoxid, Stearinsäure, Alterungsschutzmittel und Tackifier zugegeben und eingeknetet. Anschließend wurden jeweils die Hälfte der Kieselsäure, des Verstärkungsmittels und des aromatischen Öls im Fall der Mischungen 1 bis 3 und jeweils die Hälfte des Rußes und des aromatischen Öls im Fall der Mischungen 4 bis 6 zugegeben und eingeknetet. Schließlich wurde jeweils die zweite Hälfte der eben genannten Bestandteile zugegeben und eingeknetet. Bei dem gesamten Mischprozeß wurde eine maximale Temperatur von 160°C eingehalten.

Nach Abkühlung der Mischungen wurde in einer zweiten Stufe nochmals geknetet, wobei wiederum eine Temperatur von 160°C nicht überschritten wurde. Die zweite Stufe wurde nur bei den Kautschukmischungen 1 bis 3 durchgeführt, dagegen nicht bei den Rußmischungen. Schließlich wurde in einer dritten Stufe (bei den Mischungen 4 bis 6 die zweite Stufe) das Vulkanisationssystem aus Schwefel und Vulkanisationsbeschleunigern auf einer Walze eingemischt. Auch hierbei wurde eine Temperatur unterhalb der Vernetzungstemperatur eingehalten.

An den aus den Kautschukmischungen hergestellten Probekörpern wurden Abrieb und Verlustfaktor tan δ bestimmt. Den für die Kautschukmischung 6 gemessenen Werten wurde jeweils der Wert 100 zugeordnet, und die für die anderen Kautschukmischungen gemessenen Werte wurden jeweils als Relativwerte gegenüber dem Bezugswert 100 in der Tabelle angegeben. Werte über 100 bedeuten eine Verbesserung der Eigenschaften.

Wie den in der Tabelle angegebenen Werten zu entnehmen ist, ist die Lebensdauer unter Abrieb bei den erfindungsgemäßen Kautschukmischungen etwa vergleichbar mit der Lebensdauer unter Abrieb der entsprechenden Kautschukmischungen, die statt Kieselsäure Ruß enthalten. Dies ist nicht zu erwarten gewesen, da nach den Angaben der EP 0 501 227 A1 der Ersatz von Ruß durch Kieselsäure zu einer wesentlichen Verschlechterung der Lebensdauer unter Abrieb führt, sofern die Kautschukmischung Emulsions-SBR enthält. Mit der erfindungsgemäßen Kautschukmischung wird somit eine starke Verbesserung des tan δ erreicht, der mit dem Rollwiderstand korreliert, ohne daß die Lebensdauer unter Abrieb verschlechtert wird.

## Patentansprüche

1. Mit Schwefel vulkanisierbare Kautschukmischung, die ein Copolymer aus konjugiertem Dien und vinylaromatischer Verbindung, Kieselsäure als Füllstoff, übliche Zusätze sowie ein Vulkanisationssystem enthält, dadurch gekenn= zeichnet, daß die Kautschukmischung 10 bis 85 Gewichts= teile durch Emulsionspolymerisation hergestelltes Copolymer aus konjugiertem Dien und vinylaromatischer Verbindung mit einer Glasübergangstemperatur (Tg) zwischen -20°C und -70°C, 5 bis 40 Gewichtsteile Poly= isopren mit überwiegendem 3,4-Anteil, 10 bis 50 Gewichts= teile Polybutadien sowie 50 bis 90 Gewichtsteile Kiesel= säure enthält, wobei alle Gewichtsteile jeweils auf 100 Gewichtsteile Elastomere bezogen sind.

2. Kautschukmischung nach Anspruch 1, dadurch gekennzeichnet, daß sie 20 bis 70 Gewichtsteile durch Emulsionspolymerisation hergestelltes Copolymer aus konjugiertem Dien und vinylaromatischer Verbindung, 10 bis 30 Gewichtsteile Polyisopren und 20 bis 50 Gewichtsteile Polybutadien, jeweils auf 100 Gewichtsteile Elastomere bezogen, enthält.

3. Kautschukmischung nach Anspruch 1 oder 2, dadurch gekennzeichnet, daß das durch Emulsionspolymerisation hergestellte Copolymer aus konjugiertem Dien und vinylaromatischer Verbindung einen Gehalt an vinylaromatischer Verbindung zwischen 10 und 50 Gew.-% aufweist.

4. Kautschukmischung nach Anspruch 3, dadurch gekennzeichnet, daß der Gehalt an vinylaromatischer Verbindung zwischen 10 und 45 Gew.-% beträgt.

5. Kautschukmischung nach einem der Ansprüche 1 bis 4, dadurch gekennzeichnet, daß das durch Emulsionspolymerisation hergestellte Copolymer aus konjugiertem Dien und vinylaromatischer Verbindung eine Glasübergangstemperatur im Bereich von -25°C bis -55°C hat.

6. Kautschukmischung nach einem der Ansprüche 1 bis 5, dadurch gekennzeichnet, daß sie als durch Emulsionspolymerisation hergestelltes Copolymer Styrol-Butadien-Copolymer enthält.

7. Kautschukmischung nach einem der Ansprüche 1 bis 6, dadurch gekennzeichnet, daß die Kieselsäure eine BET-Oberfläche zwischen 100 und 250 m²/g aufweist.

8. Kautschukmischung nach einem der Ansprüche 1 bis 7, dadurch gekennzeichent, daß der Gehalt an Kieselsäure 70 bis 90 Gewichtsteile je 100 Gewichtsteile Elastomere beträgt.

9. Reifenlauffläche, dadurch gekennzeichnet, daß sie eine mit Schwefel vulkanisierbare Kautschukmischung nach einem der Ansprüche 1 bis 8 enthält.

10. Reifen, dadurch gekennzeichnet, daß er eine mit Schwefel vulkanisierte Lauffläche nach Anspruch 9 aufweist.

## Claims

1. Rubber composition vulcanisable with sulphur which contains a copolymer made out of conjugated diene and vinyl aromatic compound, silica as filler, customary additives and a vulcanisation system, characterised in that the rubber composition contains 10 to 85 parts by weight of emulsion-polymerised copolymer made out of conjugated diene and vinyl aromatic compound and having a glass transition temperature (Tg) of between -20°C and -70°C, 5 to 40 parts by weight of polyisoprene, 10 to 50 parts by weight of polybutadiene and 50 to 90 parts by weight of silica, all the parts by weight referrring in each case to 100 parts by weight of elastomers.

2. Rubber composition according to claim 1, characterised in that it contains 20 to 70 parts by weight of emulsion-polymerised copolymer made out of conjugated diene and vinyl aromatic compound, 10 to 30 parts by weight of polyisoprene and 20 to 50 parts by weight of polybutadiene, referring in each case to 100 parts by weight of elastomers.

3. Rubber composition according to claim 1 or claim 2, characterised in that the emulsion-polymerised copolymer made out of conjugated diene and vinyl aromatic compound has a vinyl aromatic compound content of between 10 and 50 percent by weight.

4. Rubber composition according to claim 3, characterised in that the vinyl aromatic compound content amounts to between 10 and 45 percent by weight.

5. Rubber composition according to any one of the claims 1 to 4, characterised in that the emulsion-polymerised copolymer made out of conjugated diene and vinyl aromatic compound has a glass transition temperature in the range from -25°C to -55°C.

6. Rubber composition according to any of the claims 1 to 5, characterised in that it contains styrene-butadiene-copolymer as emulsion-polymerised copolymer.

7. Rubber composition according to any one of the claims 1 to 6, characterised in that the silica has a BET-surface of between 100 and 250 m₂/g.

8. Rubber composition according to any one of the claims 1 to 7, characterised in that the silica content amounts to 70 to 90 parts by weight per 100 parts by weight of elastomer.

9. Tyre tread characterised in that in contains a rubber composition vulcanisable with sulphur in accordance with any one of claims 1 to 8.

10. Tyre, characterised in that it contains a tread vulcanised with sulphur in accordance with claim 9.

## Revendications

1. Composition de caoutchouc qui est vulcanisable au soufre et contient un copolymère d'un diène à doubles liaisons conjuguées et d'un composé vinylaromatique, de la silice comme charge, des additifs habituels ainsi qu'un système de vulcanisation, caractérisé par le fait que la composition de caoutchouc contient de 10 à 85 parties en poids d'un copolymère, obtenu par polymérisation en émulsion, d'un diène à doubles liaisons conjuguées et d'un composé vinylaromatique d'une température de transition vitreuse (Tg) valant entre -20°C et -70°C, 5 à 40 parties en poids de polyisoprène à proportion prépondérante de liaison 3,4, 10 à 50 parties en poids de polybutadiène ainsi que 50 à 90 parties en poids de silice, toutes les parties en poids étant chacune rapportée à 100 parties en poids d'élastomère.

2. Composition de caoutchouc selon la revendication 1, caractérisée par le fait qu'elle contient de 20 à 70 parties en poids de copolymère, obtenu par polymérisation en émulsion, d'un diène à doubles liaisons conjuguées et d'un composé vinylaromatique, 10 à 30 parties en poids de polyisoprène et 20 à 50 parties en poids de polybutadiène, chacun rapporté à 100 parties en poids d'élastomère.

3. Composition de caoutchouc selon la revendication 1 ou 2, caractérisée par le fait que le copolymère, obtenu par polymérisation en émulsion, d'un diène à doubles liaisons conjuguées et d'un composé vinylaromatique présente une teneur en le composé vinylaromatique valant entre 10 et 50 pour cent en poids.

4. Composition de caoutchouc selon la revendication 3, caractérisée par le fait que la teneur en le composé vinylaromatique vaut entre 10 et 45% en poids.

5. Composition de caoutchouc selon l'une des revendications 1 à 4, caractérisée par le fait que le copolymère, obtenu par polymérisation en émulsion, d'un diène à doubles liaisons conjuguées et d'un composé vinylaromatique présente une température de transition vitreuse sur la plage de -25°C à -55°C.

6. Composition de caoutchouc selon l'une des revendications 1 à 5, caractérisée par le fait que, comme copolymère obtenu par polymérisation en émulsion, elle contient un copolymère styrène-butadiène.

7. Composition de caoutchouc selon l'une des revendications 1 à 6, caractérisée par le fait que la silice présente une surface BET/mesurée selon la méthode Brunauer-Emett-Teller valant entre 100 et 250 m²/g.

8. Composition de caoutchouc selon l'une des revendications 1 à 7, caractérisée par le fait que la teneur en silice vaut de 70 à 90 parties en poids pour 100 parties en poids d'élastomère.

9. Bande de roulement caractérisée par le fait qu'elle contient une composition de caoutchouc, vulcanisable au soufre, conforme à l'un des revendications 1 à 8.

10. Pneumatique caractérisé par le fait qu'il contient une bande de roulement vulcanisée au soufre conforme à la revendication 9.
